# EUROPÄISCHE PATENTSCHRIFT

(11) **EP 1 440 343 B1**
(45) Veröffentlichungstag und Bekanntmachung des Hinweises auf die Patenterteilung: **01.06.2005**
(21) Anmeldenummer: 02762239.8
(22) Anmeldetag: 10.08.2002
(51) Int. Cl.: G02C 1/02

(54) **VERFAHREN, VORRICHTUNG UND SCHABLONE ZUM BEFESTIGEN VON NASEN- UND BACKENBÜGELN MIT BRILLENGLÄSERN**
METHOD, DEVICE AND TEMPLATE FOR ATTACHING BRIDGES AND SIDEPIECES TO SPECTACLE LENSES
PROCEDE, DISPOSITIF ET GABARIT POUR LA FIXATION D'UN PONT ET DE BRANCHES A DES VERRES DE LUNETTES

(30) Priorität: 30.10.2001 DE 20117732 U
(43) Veröffentlichungstag der Anmeldung: 28.07.2004
(73) Patentinhaber: Ebm Design Exclusive Brillenmode GmbH, 94036 Passau (DE)
(72) Erfinder: WIED, Günther, sen., 94036 Passau (DE)
(74) Vertreter: Wasmeier, Alfons, Dipl.-Ing.
(86) Internationale Anmeldenummer: PCT/DE2002/002944
(87) Internationale Veröffentlichungsnummer: WO 2003/040810

(56) Entgegenhaltungen:
- EP-A- 0 666 490
- EP-A- 0 953 862
- EP-A- 1 024 390
- WO-A-96/33438
- WO-A-97/21133
- DE-U- 20 117 732

## Beschreibung

Die Erfindung betrifft eine Vorrichtung, ein Verfahren und eine Schablone zum Befestigen von Nasen- und Backenbügeln mit Brillengläsern bei Randlosbrillen.

Das Befestigen von Backen- und Nasenbügeln mit den Brillengläsern von randlosen Brillen erfolgt in der Regel mit Hilfe zweier Befestigungsschrauben oder einer Befestigungsschraube und einem Stift in der Weise, daß an den Befestigungsstellen Bohrungen durch das Brillenglas gebohrt werden und an einer solchen Bohrstelle mittels Schraube das auf der Oberfläche des Brillenglases aufliegende Bügelende am Brillenglas gesichert wird. Die Halterung erfolgt somit dadurch, daß das Brillenglas zwischen Schraubkopf und Schraubmutter festgeklemmt wird. Bei einer Lockerung der Schraubverbindung oder bei Ausübung einer hohen Drehkraft auf den Bügel wird der Bügel zwangsläufig relativ zur Schraube gedreht und die Brille sitzt nicht mehr einwandfrei am Träger.

Es ist auch bereits vorgeschlagen worden (WO 97/21133), dieses Problem dadurch zu lösen, daß an den Verbindungsstellen von Bügel und Brillenglas an beiden Seitenbegrenzungen des Brillenglases Schwächungsstellen im Glas in Form von im Querschnitt rechteckförmigen Randkerben gefräst werden, die die Bügelenden aufnehmen und die in der Kerbe jeweils eine Bohrung erhalten, durch die hindurch eine Schraube Bügel und Brillenglas miteinander verbindet. Eine derartige Anordnung hat jedoch eine Reihe von Nachteilen. Einerseits wird durch die Bohrung an der ausgefrästen Kerbe die Stabilität des Brillenglases weiter geschwächt, andererseits ist das Fräsen einer derartigen Bügelaufnahme ein recht komplizierter und aufwendiger Vorgang, und ferner ist durch die Rechteckform der Kerbe der Neigungswinkel des Backenbügels, der in die Kerbe eingesetzt wird, fest vorgegeben; eine abweichende Position, in die ein Backenbügel unter Kraftanwendung gebracht wird, führt zu einer Beschädigung des Glases durch Ausbrechen an den Kanten.

Des weiteren wird mit der EP-A- 1 024 390 vorgeschlagen, eine Bohrung in den beiden entgegengesetzten Seiten eines Brillenglases und im Abstand vom Glasrand zu bohren. Beidseits der Bohrungen sind schlitzartige Einkerbungen ausgebildet, die zur Aufnahme flügetförmiger Ansätze am freien Ende der Backe dienen. Die Bohrungen müssen hierbei eines Mindestabstand vom Glasrand haben, um ein Ausbrechen beim Bohren und bei späteren Belastungen auszuschließen; dadurch wird aber auch das Blickfeld des Brillenträgers reduziert.

Bei der Anmeldung WO 96 33 438 A ist ebenfalls eine Bohrung im Brillenglas beabstandet vom Rand des Glases gebohrt. Dieser Vorschlag entspricht insoweit dem nach der vorbeschriebenen EP-A- 1 024 390.

Aufgabe der Erfindung ist, diese Schwierigkeiten auszuschalten und eine Lösung dafür anzugeben, wie auf einfache und kostengünstige Weise eine verdrehsichere Verbindung zwischen Backen- und Nasenbügeln mit Brillengläsern für randlose Brillen, eine stufenlose Veränderung des Neigungswinkels zwischen Backenbügel und Brillenglas sowie eine Verbessereung des Blickfeldes für den Brillenträger im Vergleich zu herkömmlichen Doppelschraubverbindungen von Bügeln und Brillenglas erreicht werden kann.

Gemäß der Erfindung wird diese Aufgabe mit einem Verfahren nach Anspruch 1, mit einem Brillensystem nach Anspruch 2 und mit einer Schablone nach Anspruch 4 erreicht. Weitere Ausgestaltungen der Erfindung sind Gegenstand der Unteransprüche.

Gemäß der Erfindung werden die Backen- und Nasenbügel mit den Brillengläsern von randlosen Brillen dadurch befestigt, dass an den zwei gegenüberliegenden Seiten eines Brillenglases, die mit den Bügeln verbunden werden, auf gleicher Höhe jeweils vom Außenrand der Brillengläser nach innen verlaufende horizontale Kerben in Form von Teilbohrungen, z.B. Zylinderkalotten bzw. Halbzylindern gebohrt werden, in denen das jeweilige Bügelende aufgenommen wird, und dass vom inneren Ende dieser Teilbohrung beabstandet und nach innen versetzt eine Vollbohrung etwa senkrecht zur Ebene des Brillenglases hindurch gebohrt wird wird, an der eine Schraubverbindung vorgesehen wird, die das Bügelende in der gerundeten Kerbe festhält und das Brillenglas mit dem Bügel verbindet.

Das Bohren einer Halbbohrung ist ein relativ einfach durchzuführender Arbeitsvorgang, ganz im Gegensatz zu einer rechteckförmig bzw. quaderförmig ausgebildeten Kerbe, die gefräst werden muss und deren Herstellung relativ kompliziert und damit aufwendig ist. Des weiteren wird mit einer derartigen gerundeten Kerbe in Form einer Teilbohrung erreicht, dass die Neigung des in der Kerbe festgelegten Backenbügels gegenüber der Ebene des Brillenglases auf extrem einfache und zweckmäßige Weise geändert werden kann, so dass eine individuelle Anstellung des Brillenglases zum Backenbügel entsprechend den Wünschen des Brillenträgers und seiner Gesichtsform vorgenommen werden kann.

Mit einem derartigen Verfahren ist es möglich, ein Brillensystem sehr wirtschaftlich herzustellen, bei dem die Backen- und Nasenbügel mit den Brillengläsern randloser Brillen so verbunden, z.B. verschraubt werden können, dass die Enden der Backenund Nasenbügel in den Kerben im Winkel zur Glasebene verstellbar sind und die Bohrung für die Schraubverbindung zwischen Bügel und Brillenglas entsprechend dem gewünschten Verstellwinkel nach dem Festlegen des Winkels gebohrt werden kann.

Zum einfachen, arbeitssparenden und genauen Durchführen des erfindungsgemäßen Verfahrens und zum Herstellen der Bohrverbindungen zwischen Brillenglas und Bügeln wird eine Bohrschablone bzw. Bohrlehre vorgeschlagen.

Die Bohrlehre nach der Erfindung ist ein Bauteil. das aus einem verdickten, nabenförmigen Kopfteil sowie einem z.B. einstückig von diesem Kopfteil ausgehenden, sich seitlich erstreckenden, plattenförmigen Arm besteht, das flexibel ausgebildet ist und mit seiner konvexen Seite der konvexen Wölbung eines Brillenglases angepasst ist, aufgrund seiner Flexibilität jedoch variabel und für unterschiedliche Brillenglaswölbungen geeignet ist. Der Arm erstreckt sich im wesentlichen über die gesamte Breite eines Brillenglases, so dass eine einwandfreie Auflage auf dem Brillenglas zur Durchführung einer exakten Bohrung sichergestellt ist. Der Arm selbst hat eine im Vergleich zur Breite geringe Dicke.

Das Kopfteil ist ein nabenförmiges Bauteil mit einer Bohrbuchse (Hauptbohrbuchse), deren Achse im wesentlichen rechtwinklig zur Ebene des Armes bzw. zur Oberseite des Brillenglases verläuft. Auf der Außenseite, d.h. der dem Arm entgegengesetzten Seite des Kopfteils der Bohrlehre, ist eine weitere Bohrbuchse vorgesehen, die etwa rechtwinklig zur Hauptbohrbuchse positioniert ist. Diese Bohrbuchse verläuft in Richtung der Unterseite des Armes, die auf der Oberseite des Brillenglases aufliegt, wenn die Bohrlehre im Einsatz ist. Die Mittelachse der Bohrbuchse verläuft dabei in tangentialer Richtung zur Unterseite des Schablonenarmes, und vorzugsweise etwas tiefer als die untere Krümmungslinie des Armes. Wird mit Hilfe dieser Bohrbuchse eine Bohrung erstellt, wird die Bohrung nur teilweise im Kopfteil ausgebildet, so dass eine teilzylinderförmige oder zylinderkalottenförmige, vorzugsweise etwa halbzylindrische Vertiefung im Boden des Kopfteiles entsteht, die eine Nut bzw. Kerbe ausbildet, in der das Ende des Bügels aufgenommen wird, das mit dem Brillenglas verschraubt werden soll, so dass das Bügelende in diese nutförmige Vertiefung eingesetzt ist, auch wenn die Schraubverbindung lose ist, und damit eine Arretierung des Bügelendes auf der Glasoberfläche entsteht sowie eine Relativverdrehung zwischen Bügelende und Brillenglas verhindert wird.

Mit einer Ein-Loch-Befestigung nach der Erfindung wird gegenüber herkömmlichen Zwei-Loch-Befestigungen erreicht, daß das Blickfeld des Brillenträgers bei nur einem Gewindestift im Brillenglas an beiden Seitenrändern des Glases entscheidend verbessert wird, da der jeweilige Gewindestift erheblich näher am Seitenrand des Brillenglases, sowohl am Backenbügel als auch am Nasenbügel, gesetzt werden kann.

Beim Setzen der Bohrung für die Querbuchse besteht die Gefahr, dass der Bohrer über die vertikale Bohrung der Hauptbohrbuchse hinaus bohrt und weiter in die Schablone oder in das Brillenglas eindringt als dies vorgesehen ist. Um hierbei eine mögliche Beschädigung des Brillenglases zu verhindern, wird in der Bohrschablone ein Anschlag aus Hartmetall vorgesehen, der verhindert, dass der Bohrer nur bis zur Tiefe des Anschlages in Richtung der Querbohrung in die Schablone eindringen kann. Dieser Anschlag ist z.B. ein in die Schablone eingesetzter Anschlagstift oder eine Anschlagschraube. Bei einer abgeänderten Ausführungsform nach der Erfindung wird vorgeschlagen, die Bohrbuchse der Bohrschablone, mit der die Vollbohrung durch das Brillenglas gebohrt wird, als Anschlag zu verwenden und sie entsprechend aus Hartmetall oder mit Hartmetallauflage auszuführen, sodaß ein gesonderter Anschlagstift entfällt.

Nachstehend wird die Erfindung in Verbindung mit der Zeichnung anhand eines Ausführungsbeispieles erläutert. Es zeigt:

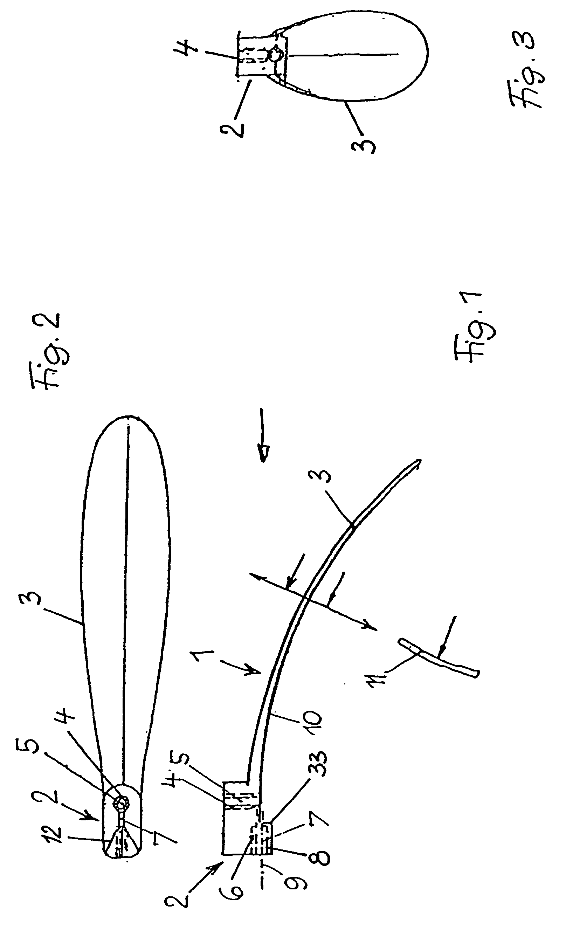

- Fig. 1: eine Seitenansicht der Bohrlehre gemäß der Erfindung,
- Fig. 2: eine Aufsicht auf die Bohrlehre nach der Erfindung,
- Fig. 3: eine Endansicht der Bohrlehre in Pfeilrichtung nach Fig. 1,
- Fig. 4: eine Seitenansicht einer Bohrlehre in Anlage mit einem strichpunktiert dargestellten Brillenglas in einer gegenüber den Figuren 1 - 3 abgeänderten Ausführungsform,
- Fig. 5: eine Aufsicht auf die Bohrlehre nach Fig. 4,
- Fig. 6: die Bohrlehre nach der Erfindung im Einsatz beim Herstellen der Bohrungen,
- Fig. 7: ein Brillenglas mit den beiden Bohrungen und Kerben an entgegengesetzten Verbindungsstellen mit dem Brillengestell,
- Fig.8: eine Schnittansicht des Endes eines Backenbügels und eines Nasenbügels mit Brillenglas in zusammengebautem Zustand,
- Fig. 9: eine vergrößerte Darstellung der Bohrlehre nach Fig. 1, und zwar eine Schnittdarstellung längs der Linie I-I der Fig. 10,
- Fig. 10: eine Aufsicht auf das Kopfteil nach Fig. 9 mit getrennt dargestellter Bohrbuchse,
- Fig. 11: eine Stimansicht der Darstellung nach Fig. 9,
- Fig. 12: eine Seitenansicht einer abgeänderten Ausführungsform der Bohrlehre nach Fig. 1,
- Fig. 13: eine schematische perspektivische Ansicht eines Ausschnittes eines Brillenglases mit der erfindungsgemäßen Verbindung,
- Fig. 14: eine schematische Ansicht des Brillenglases mit der erfindungsgemäßen Verbindung von vorne,
- Fig. 15: eine schematische Seitenansicht der Darstellung nach Fig. 14,
- Fig. 16: eine Ansicht der Darstellung nach Fig. 13 von oben.

Die Bohrlehre 1 nach der Erfindung besteht aus einem Kopfteil 2 und einem davon ausgehenden, einteiligen Arm 3. Das Kopfteil 2 ist nabenförmig ausgebildet und weist in Verlängerung seiner Unterseite den flexiblen, konvex gekrümmten Arm 3 auf. Im Kopfteil 2 der Bohrschablone ist eine Hauptbohrbuchse 4 ausgebildet, die etwa rechtwinklig zur Ebene des Kopfteiles verläuft und die das Kopfteil von oben nach unten durchsetzt. Diese Hauptbohrbuchse 4 weist eine durchgehende Bohrung 5 auf, mit der die durchgehende Bohrung 5' in das Brillenglas 16 gebohrt wird. Seitlich am Kopfteil 2 ist eine weitere Bohrbuchse 6 in einem verstärkten Abschnitt des Kopfteiles 2 mit einer Bohrung 7 angeordnet, mit der eine Teilbohrung 27 (Fig. 12),z.B. in Form einer Zylinderkalotte etwa in tangentialer Richtung zur Unterseite des Armes 3 in das Brillenglas gebohrt wird, so dass eine Kerbe bzw. Nut 8 am äußeren Rand des Brillenglases entsteht, die in Richtung zur Bohrung 5' verläuft, Beide Bohrbuchsen 4 und 6 sind vorzugsweise gehärtet. Die Achse 9 der Bohrung 7 verläuft dabei etwas unterhalb der Unterseite 10 des Kopfteiles 2 und der Unterseite 10 des Armes 3, die die Verlängerung der Unterseite des Kopfteiles 2 bildet. Mit 11 ist ein Querschnitt durch den Arm 3 schematisch dargestellt. 12 bezeichnet die Begrenzung einer Aussparung für das Setzen der Bohrbuchse 6.

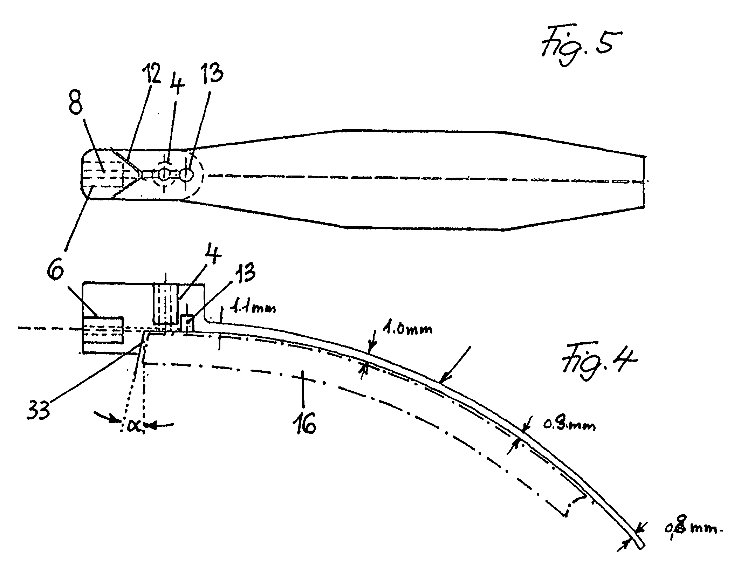

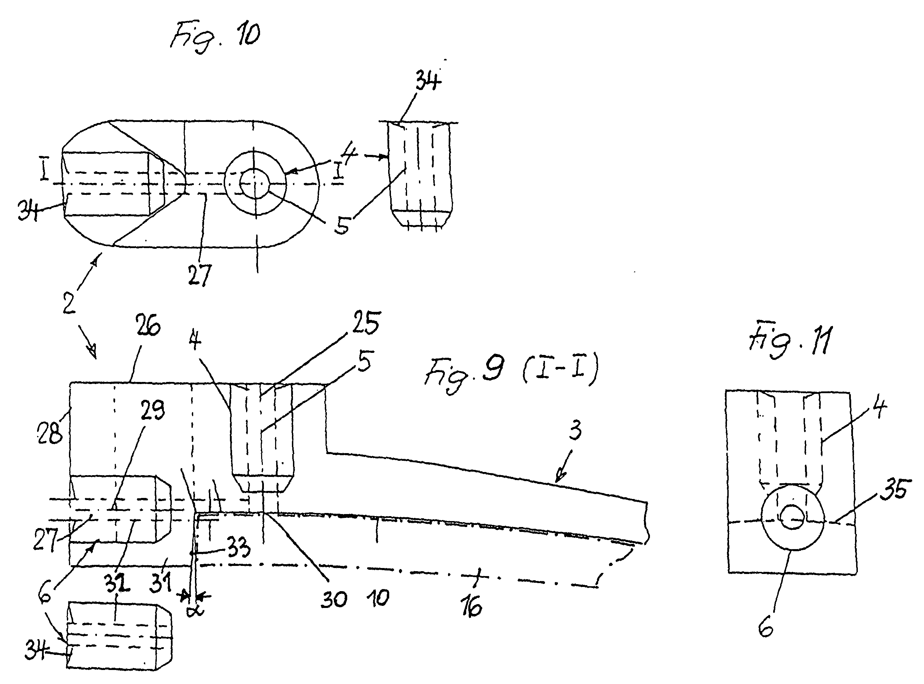

Die abgeänderte Ausführungsform einer Bohrschablone nach den Figuren 4 und 5 weist einen Anschlag 13 auf, der das Bohren der seitlichen Kerbe 8 mit Hilfe der Bohrbuchse 6 begrenzt. Die Stufe 33 (Fig. 9) des Kopfteiles 2, die mit der Umfangsfläche des Brillenglases 16 beim Einsetzen der Bohrschablone in Eingriff kommt, ist abgeschrägt (nach unten und nach außen verlaufend) und legt den Rand des Brillenglases fest. Die Schräge hat einen Winkel α (z.B. zwischen 2° und 10°). Der Arm 3 der Bohrschablone 1 nimmt in der Dicke nach außen von z.B. 1,1 mm bis z.B. 0,8 mm ab.

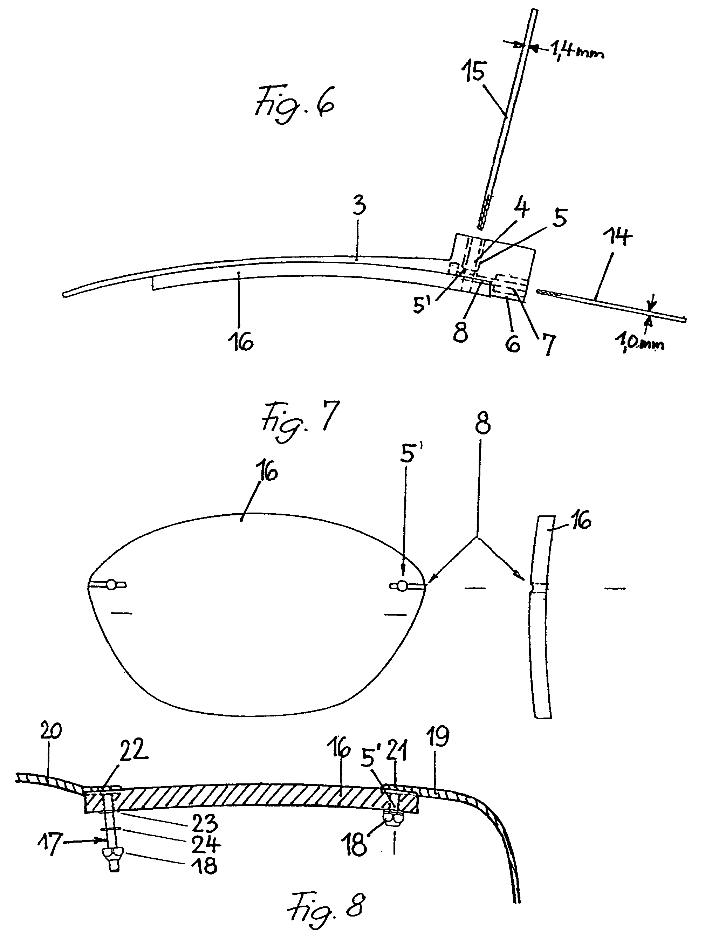

Beim Einsatz der Bohrschablone 1 wird (wie in Fig. 6 dargestellt) zuerst mit Hilfe der Bohrbuchse 6 eine Teilbohrung 27 mit Hilfe des Bohrers 14 seitlich in das Glas hinein gebohrt, derart, dass die Teilbohrung mit einem Durchmesser von z.B. 1,0 mm als teilzylindrische bzw. zylinderkalottenförmige Bohrung entsteht. Anschließend wird mit Hilfe der Bohrbuchse 4 eine Vollbohrung 5' mit einem Durchmesser von z.B. 1,4 mm mit Hilfe eines Bohrers 15 durch das Brillenglas senkrecht zur Glasebene gebohrt.

In Fig. 7 ist ein Brillenglas 16 mit der Vollbohrung 5' und der Kerbe 8 mit Teilbohrung 27 zur Aufnahme des Endes 21 eines Backenbügels 19 bzw. eines Nasenbügels 20 mit Gewindestift 17 dargestellt. Beim Bohren durch die seitliche Bohrbuchse 6 hindurch entsteht auf der Glasoberfläche die gerundete Kerbe mit einer Tiefe von z.B. 0,4 mm. Das glasseitige Ende des Backenbügels wird mit dem Brillenglas über den mit dem Bügel befestigten Gewindestift 17 verschraubt, wobei die Backe in die Kerbe 8 eingepasst wird. In dieser Winkelposition ist der Bügel gegenüber dem Brillenglas 16 drehgesichert. Andererseits ist es bei Erstellung der Bohrung 27 dadurch, dass das Bügelende 21 in der gerundeten Kerbe drehbar geführt ist, auf besonders einfache Weise möglich, den Neigungswinkel des Brillenglases zum in der Kerbe aufgenommenen Bügelende zu verändern, und bei der gewünschten Winkelposition wird das Bohrloch 5' entsprechend gebohrt.

Wie in Fig. 8 dargestellt, nimmt das Ende 21 des Backenbügels 19 einen Gewindestift 17 in einer Kunststoffhülse 23, der die Bohrung 5' im Glas 16 durchsetzt, sowie am freien Ende eine Metallunterlegscheibe 24 und eine Schraubmutter 18 auf, die auf den Gewindestift 17 aufgeschraubt wird und die das Brillenglas 16 mit dem Ende 21 des Bügels 19 fest verbindet. Der überstehende Teil des Gewindestiftes 17 wird nach dem Festziehen abgeschnitten. Auf der linken Seite der Fig. 8 ist der Gewindestift 17 in seiner vollen Länge mit Schraubmutter 18 vor dem Anziehen der Mutter gezeigt. Die Schraubmutter 18 wird an der Kunststoffhülse 23 und über die Metallunterlegscheibe 24 festgezogen und der überstehende Teil des Gewindestiftes 17 abgeschnitten oder abgezwickt. Auf diese Weise ist es möglich, Gewindestifte einer Größe für unterschiedlichen Dicken eines Brillenglases einzusetzen.

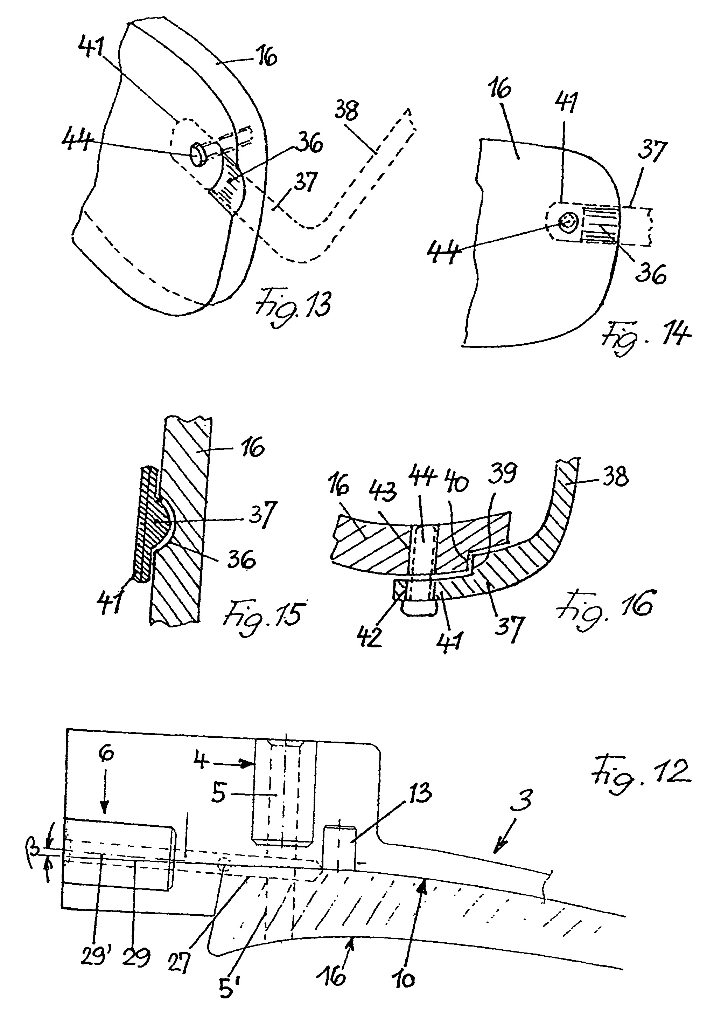

Bei der vergrößerten Darstellung nach den Figuren 9, 10 und 11 ist die Bohrbuchse 4 mit einer Achse 25 und einer Bohrung 5 vertikal zur Deckfläche 26 des Kopfteiles 2 dargestellt. Die Bohrung 5 entspricht dem Durchmesser des Gewindestiftes 17 mit aufgesteckter Kunststoffhülse 23, der zur Festlegung des Brillenglases 16 mit dem Backenbügel 19 fest verbunden ist. Die Bohrbuchse 6 dient zum Bohren einer Querbohrung 27 von der Stirnseite 28 her, deren Achse 29 rechtwinklig zur Achse 25 der Bohrung 5 verläuft. Die beiden Achsen 25 und 29 schneiden sich an einer Stelle 30. Die Bohrung 27 ist so ausgebildet, dass sie im unteren Bereich 31 des Kopfteiles 2 eine Teilbohrung (Zylinderkalotte) ergibt, die im Bereich der Unterseite 10 des Armes 3 als Nut 32 erscheint. Der Absatz 33 ist zur Aufnahme des Randes des Brillenglases 16 in einem Winkel β (etwa 2° - 10°) verjüngt ausgebildet, wie die Fig. 9 zeigt. Die beiden Bohrbuchsen 4 und 6 sind am Eingang der Bohrung 5 bzw. 7 mit einer leicht konischen Stirnfläche ausgeführt, um das Einführen des Bohrers 14 in die Bohrung der Bohrbuchse 6 zu erleichtern. In Fig. 11 ist die leicht gekrümmte Kantenlinie 35 der Unterseite des Armes 10 gestrichelt dargestellt.

Bei der in Fig. 12 dargestellten Ausführungsform ist an der Unterseite 10 des Armes 3 der Schablone in Verlängerung der Teilbohrung 27 von der vertikalen Bohrung 5 beabstandet im Arm 3 ein Anschlag 13 vorgesehen, der ein in den Arm 3 auf der Unterseite 10 eingesetzter Anschlagstift oder eine Anschlagschraube sein kann und der vorzugsweise aus Hartmetall besteht, so dass der Bohrer zum Setzen der Teilbohrung 27 gegen den Anschlag 13 trifft und sicherstellt, dass die Tiefe der Bohrung einen vorgegebenen Wert nicht übersteigt. Wie sich aus Fig. 12 ergibt, ist die seitliche Teilbohrung 27 gegenüber der Tangente zur Unterseite 10 des Armes 3 im Winkel β (β ungefähr 2°), bedingt durch die seitliche bzw. horizontale Bohrbuchse 6, die gegenüber der Horizontalen um den gleichen Winkel β nach innen und unten verlaufend geneigt, so dass die Achse 29' der Bohrung 27 gegenüber der horizontalen Achse 29 eine Schräge mit dem Winkel β aufweist. Diese Schräge dient zum Ausgleich des Spiels, um das der Bohrer beim Bohrvorgang verformt wird.

Ein einzelnes Brillenglas 16 ist in den Figuren 13 - 16 dargestellt. Die teilzylindrische Bohrung 36 ist die Kerbe, die das Befestigungsende 37 des Backenbügels 38 oder des Nasenbügels eines gestrichelt angedeuteten Brillengestells aufnimmt und positioniert. Das Bügelende weist einen Absatz 39 auf, der dem inneren Ende der durch die Bohrung 36 im Brillenglas gebildeten Stufe 40 entspricht. Vom Absatz 39 des Bügelendes 37 ausgehend erstreckt sich ein Ansatz 41 mit reduzierter Dicke des Bügelendes 37 eine kurze Strecke nach innen. Dieser Ansatz 41 besitzt eine Bohrung 42, die bei eingesetztem Bügelende 37 in Deckung mit der durch das Brillenglas gebohrten Bohrung 43 kommt und den Gewindestift bzw. die Schraube 44 aufnimmt, die den Bügel 38 bzw. dessen Ansatz 41 mit dem Brillenglas 16 verbindet. Alternativ kann der Ansatz 42 einen aufgelöteten Gewindestift aufnehmen, der in die Bohrung 43 des Brillenglases eingesetzt wird.

Die Anordnung nach Fig. 12 kann auch so variiert werden. daß die Bohrbuchse 4 soweit nach unten verlängert wird, daß die Bohrbuchse selbst als Anschlag für den Querbohrer wirkt und die maximale Bohrtiefe durch die linke Begrenzung der Bohrbuchse bestimmt ist. Dies hat zur Folge, daß die Querbohrung 27 bzw. die Kerbe die senkrecht durch das Brillenglas 16 gebohrte Bohrung 5' nicht erreichen kann, sondern vorher endet. Damit wird erreicht, daß das Brillenglas an der Stelle, an der es durch durch die Bohrung 5' geschwächt wird, nicht zusätzlich durch die Querbohrung geschwächt wird, sodaß diese Variante eine Reduzierung der Gefahr eines Glasbruches ergibt.

### Bezugszeichenliste

- 1: Bohrlehre
- 2,: Kopfteil der Schablone
- 3: Arm
- 4: Hauptbohrbuchse
- 5: Bohrung (längs) in Bohrbuchse 4
- 5': Bohrung im Glas
- 6: Bohrbuchse
- 7: Teilbohrung (quer) in Bohrbuchse 6
- 8: Kerbe
- 9: Achse der Bohrung 7
- 10: Unterseite Arm 3
- 11: Querschnitt Arm 3
- 12: Aussparung
- 13: Anschlag
- 14: Bohrer für Querbohrung
- 15: Bohrer für Längsbohrung
- 16: Brillenglas
- 17: Gewindestift
- 18: Kontermutter
- 19: Backenbügel
- 20: Nasenbügel
- 21, 22: Bügelenden
- 23: Kunststoffhülse
- 24: Metall-Unterlegscheibe
- 25: Achse der Buchse 4
- 26: Deckfläche
- 27: Querbohrung
- 28: Stirnseite
- 29: Achse
- 30: Schnittstelle
- 31: unterer Bereich
- 32: Nut bzw. Kerbe
- 33: Absatz bzw. Stufe
- 34: Stirnfläche
- 35: Kante
- 36: teilzylindrische Bohrung
- 37: Befestigungsende
- 38: Backen- oder Nasenbügel
- 39: Absatz
- 40: Stufe
- 41: Ansatz
- 42, 43: Bohrung
- 44: Schraube

## Patentansprüche

1. Verfahren zum Bohren von Bohrlöchern für die Verbindung von Backen- und Nasenbügeln von randlosen Brillengestellen mit Brillengläsern, bei dem an zwei gegenüberliegenden Seiten Begrenzungen eines Brillenglases von außen nach innen verlaufende horizontale Kerben im Glas erstellt werden und durch das Glas hindurch Bohrungen zur Aufnahme von Schraubverbindungen gebohrt werden, **dadurch gekennzeichnet, dass** Bohrkerben (8, 8) beiden von Rändern des Brillenglases nach innen verlaufend so in das Glas (16) gebohrt werden, dass jeweils etwa eine Hälfte des jeweiliglen Bohrloches (36) in das Glas (16) gebohrt wird und etwa die andere Hälfte außerhalb des Glases (12) (teilweise Leerbohrung) liegt, derart, dass die Achse des Bohrloches parallel zur Ebene des Brillenglases verläuft, und dass ein Bohrloch (38), dessen Achse etwa im rechten Winkel zur Achse der Kerböffnung verläuft, in das Brillenglas (16) gebohrt wird, das die Schraubverbindung (44) zum Festlegen der Backen- und des Nasenbügels mit dem Brillenglas aufnimmt.

2. Verfahren zum Bohren von Bohrlöchern nach Anspruch 1, **dadurch gekennzeichnet, dass** zum Bohren der seitlichen Bohrkerbe (29) in das Brillenglas (12) eine Schablone (1) auf das Brillenglas (12, 13) aufgelegt wird, die eine Bohrbuchse aufweist, durch die die Bohrkerbe exakt und glasschonend gebohrt wird, und dass beabstandet von der Kerb-Bohrbuchse mit Hilfe der Schablone und der in der Schablone angeordneten weiteren Bohrbuchse ein von der Bohrkerbe beabstandetes Bohrloch (36) durch das Brillenglas (12) hindurch gebohrt wird, das die zur Befestigung des Bügels (31) mit dem Glas benötigte Schraubverbindung aufnimmt.

3. Verfahren nach Anspruch 1, **dadurch gekennzeichnet, dass** das Ende eines jeden Backen- oder Nasenbügels einen Gewindestift aufweist, dessen Form der Kerbe der Bohrung entspricht, dass der Gewindestift durch die Bohrung des Bohrloches geführt ist, und dass auf das freie Ende des Bohrstiftes eine Kontermutter aufgesetzt ist.

4. Verfahren nach Anspruch 3,**dadurch gekennzeichnet, dass** der Gewindestift mit Überlänge und passend für maximale Glasdicken ausgebildet ist, und dass der überstehende Stiftteil auf die gewünschte Länge gekürzt wird.

5. Brillensystem, hergestellt nach einem Verfahren nach einem der Ansprüche 1 - 4, **dadurch gekennzeichnet, dass** Bohrkerben (8, 8) von den beiden Rändern des Brillenglases (16) ausgehend in das Glas gebohrt nach innen verlaufen, die vom Rand des Brillenglases nach innen verlaufende Bohrung jeweils etwa bis zur Hälfte des jeweiligen Bohrloches (36) zylindrisch in das Glas (16) gebohrt ist und die andere etwa halbzylindrische Hälfte des Bohrloches eine Teil-Leerbohrung ist, die Achse des Bohrloches in oder parallel zur Ebene des Brillenglases verläuft und ein weiteres Bohrloch (5') mit seiner Achse etwa im rechten Winkel zur Achse des Kerbloches (36) im Glas (16) zur Aufnahme einer Schraubverbindung (44) ausgebildet ist.

6. Brillensystem nach Anspruch 5, **dadurch gekennzeichnet, dass** die Enden (21, 22) der Nasen- und Backenbügel (19, 20) in ihrer Umfangsform der Querschnittsform der Bohrkerbe (36) angepaßt sind, dass der Endabschnitt (37) eine Abstufung (39) reduzierter Bügeldicke entsprechend der Tiefe der Bohrkerbe (36) aufweist und dass die Bohrung (5') durch den Endabschnitt (37) mit der Bohrung (43) im Glas (16) deckungsgleich ist.

7. Brillensystem nach Anspruch 6, **dadurch gekennzeichnet, dass** die innere Abstufung (40) der Bohrkerbe (36) paßgenau mit der Abstufung (39) des Brillenbügels (38) übereinstimmt.

8. Bohrschablone für das Erstellen von Bohrungen in Brillengläsern, zum Verbinden des Brillenglases mit einem Ende eines Bügels des Brillengestells, zur Durchführung des Verfahrens nach Ansprüchen 1 und 2 bzw. zur Herstellung des Brillensystems nach den Ansprüchen 3, 4 oder 5, **dadurch gekennzeichnet, dass** die Schablone (1) aus einem Kopfteil (2) mit einer Bohrbuchse (4) und aus einem flexiblen, sich von dem Kopfteil aus seitlich erstreckenden, plattenförmigen Arm (3) besteht, wobei die Achse der Bohrbuchse etwa senkrecht zur Ebene des sich seitlich erstreckenden Armes verläuft, dass das Kopfteil eine weitere Bohrbuchse (6) aufweist, deren Achse etwa in der Ebene des sich seitlich erstreckenden Armes (3) verläuft, wobei die Schablone an ein zu bearbeitendes Brillenglas so anlegbar ist, dass der Arm auf dem Brillenglas aufliegt und der Kopfteil mit der seitlichen Begrenzung des Brillenglases in Anlage kommt, und dass die Mittelachse der seitlichen Bohrbuchse (6) etwa tangential zur Unterseite (10) des sich seitlich erstreckenden Armes (3) verläuft.

9. Bohrschablone nach Anspruch 6, **dadurch gekennzeichnet, dass** die Schablone (1) aus einem Kopfteil (2) und einem langstieligen seitlichen Arm (3) eine L-Form mit kurzem stehendem Abschnitt (2) und langem liegendem Abschnitt (3) bildet.

10. Bohrschablone nach Anspruch 6 oder 7, **dadurch gekennzeichnet, dass** die Unterseite (10) des sich seitlich erstreckenden Armes (3) etwa der Wölbung eines Brillenglases (16) zwischen dem Nasenbügel-Anschluss und dem Backenbügel-Anschluss (14) entsprechend sowie der Wölbung des Brillenglases etwa im rechten Winkel dazu entsprechend gekrümmt ist.

11. Bohrschablone nach einem der Ansprüche 6 - 8, **dadurch gekennzeichnet, dass** der sich seitlich erstreckende Arm (3) in Aufsicht etwa Keulenform hat, an das Kopfteil (2) einstückig anschließt, ein Verhältnis von Breite : Dicke von etwa 5:1 bis 15:1 hat, und über seine Längserstreckung flexibel zur Anpassung an unterschiedliche Krümmungen des Brillenglases (12; 13) ausgebildet ist.

12. Bohrschablone nach einem der Ansprüche 6 - 9, **dadurch gekennzeichnet, dass** der sich seitlich erstreckende Arm (3) sowohl in der Längs- als auch in der Querachse gekrümmt ist.

13. Bohrschablone nach einem der Ansprüche 6 - 10, **dadurch gekennzeichnet, dass** in Achsrichtung der Bohrbuchse (6) im Bereich des Endes des Kopfteiles (2) ein Anschlag (13) ausgebildet ist, der eine Begrenzung für einen die Querbohrung (7) erstellenden Bohrer (14) darstellt.

14. Bohrschablone nach Anspruch 11, **dadurch gekennzeichnet, dass** der Anschlag (13) ein in die Schablone eingesetzter, z.B. eingeschraubter Anschlagstift ist, oder die Bohrhülse (4) selbst als Anschlag ausgebildet ist.

## Claims

1. Method for drilling drill holes for connecting cheek and nose side pieces of rimless spectacle frames to spectacle lenses, in which on two facing lateral boundaries of a spectacle lens horizontal notches running from the outside to the inside are made in the lens and through said lens are drilled bores for receiving screw joints, **characterized in that** the two drill notches (8, 8) running from the rims of the spectacle lens in the inwards direction are drilled in the lens (16) in such a way that in each case approximately half the particular drill hole (36) is drilled in the lens (16) and approximately the other half is located outside the lens (12) (partial blank bore), that the drill hole axis is parallel to the spectacle lens plane and that a drill hole (38), whose axis is roughly at right angles to the notch opening axis is drilled in the spectacle lens (16) and receives the screw joint (44) for securing the cheek and nose side piece with the spectacle lens.

2. Method for drilling drill holes according to claim 1, **characterized in that** for drilling the lateral drill notch (29) in the spectacle lens (12) a template (1) is placed on the spectacle lens (12, 13) and has a drill bush through which the drill notch is drilled in a precise and lens-protecting manner and that, spaced from the notch drill bush with the aid of the template and the further drill bush located in the template, a drill hole (36) spaced from the drill notch is drilled through the spectacle lens (12) and receives the screw joint required for fixing the side piece (31) to the lens.

3. Method according to claim 1, **characterized in that** the end of each cheek or nose side piece has a threaded pin, whose shape corresponds to the notch of the bore, that the threaded pin is passed through the bore of the drill hole and that a lock nut is mounted on the free end of the pin.

4. Method according to claim 3, **characterized in that** the threaded pin is constructed with extra length and matches maximum lens thicknesses and that the projecting pin part is shortened to the desired length.

5. Spectacle system, manufactured using a method according to one of the claims 1 to 4, **characterized in that** drill notches (8, 8) are drilled in inwardly directed manner in the lens starting from both rims of the spectacle lens (16), the bore running inwards from the spectacle lens rim is in each case drilled cylindrically in the lens (16) roughly up to half the particular drill notch (36) and the other, approximately semicylindrical half of the drill hole is a partial blank bore, the axis of the drill hole is in or parallel to the spectacle lens plane and a further drill hole (5') with its axis roughly at right angles to the axis of the drill notch (36) is formed in the lens (16) for receiving a screw joint (44).

6. Spectacle system according to claim 5, **characterized in that** the circumferential shape of the ends (21, 22) of the nose and cheek side pieces (19, 20) are adapted to the cross-sectional shape of the drill notch (36), that the end portion (37) has a reduced side piece thickness step (39) corresponding to the depth of the drill notch (36) and that the bore (5') through the end portion (37) is congruent with the bore (43) in the lens (16).

7. Spectacle system according to claim 6, **characterized in that** the inner step (40) of the drill notch (36) coincides in accurate fitting manner with the step (39) of the side piece (38).

8. Drilling template for making bores in spectacle lenses for connecting the spectacle lens to one end of the spectacle frame side piece, for performing the method according to claims 1 and 2 or for manufacturing the spectacle system according to claims 3, 4 or 5, **characterized in that** the template (1) comprises a top part (2) with a drill bush (4) and a flexible plate-like arm (3) extending sideways from the top part, the drill bush axis being approximately perpendicular to the plane of the sideways extending arm, that the top part has a further drill bush (6), whose axis is roughly in the plane of the sideways extending arm (3), the template being applicable to a spectacle lens to be worked in such a way that the arm rests on the spectacle lens and the top part comes into engagement with the lateral boundary of the spectacle lens, and that the central axis of the lateral drill bush (6) is roughly tangential to the underside (10) of the sideways extending arm (3).

9. Drilling template according to claim 6, **characterized in that** the template (1) formed from a top part (2) and a long-shaft, lateral arm (3) forms a L-shape with a short standing portion (2) and a long lying portion (3).

10. Drilling template according to claim 6 or 7, **characterized in that** the underside (10) of the sideways extending arm (3) is curved roughly corresponding to the convexity of a spectacle lens (16) between the nose side piece connection and the cheek side piece connection (14) corresponding to the convexity of the spectacle lens roughly at right angles thereto.

11. Drilling template according to one of the claims 6 to 8, **characterized in that** the sideways extending arm (3) in plan view is roughly club-shaped, connects in one piece to the top part (2), has a width:thickness ratio of approximately 5:1 to 15:1 and is flexibly constructed over its longitudinal extension for adapting to different curvatures of the spectacle lens (12, 13).

12. Drilling template according to one of the claims 6 to 9, **characterized in that** the sideways extending arm (3) is curved both in the longitudinal and the transverse axis.

13. Drilling template according to one of the claims 6 to 10, **characterized in that** in the axial direction of the drill bush (6) in the vicinity of the end of the top part (2) is formed a stop (13), which constitutes a boundary for a drill (14) producing the cross-bore (7).

14. Drilling template according to claim 11, **characterized in that** the stop (13) is a detent pin inserted, e.g. screwed into the template, or the drill bush (4) is itself constructed as a stop.

## Revendications

1. Procédé pour forer des de trous de forage pour relier des arceaux de branche et de pont de montures de lunettes sans bord à des verres de lunettes, dans lequel des entailles horizontales s'étendant de l'extérieur vers l'intérieur sont réalisées sur deux côtés opposés limitant un verre de lunettes et des forures sont forées à travers le verre pour accueillir des raccords à vis, **caractérisé en ce que** des entailles (8, 8) de forage s'étendant toutes deux des bords du verre de lunettes vers l'intérieur sont forées dans le verre (16) de telle manière qu'environ une moitié du trou de forage (36) concerné soit chaque fois forée dans le verre (16) et environ l'autre moitié se trouve en dehors du verre (12) (forure en partie à vide) de telle manière que l'axe du trou de forage s'étende parallèlement au plan du verre de lunettes et qu'un trou de forage (38) dont l'axe s'étend approximativement à angle droit par rapport à l'axe de l'ouverture d'entaille est foré dans le verre (16) de lunettes qui accueille le raccord à vis (44) pour fixer les arceaux de branche et de pont au verre de lunettes.

2. Procédé pour forer des trous de forage selon la revendication 1, **caractérisé en ce que** pour forer les entailles (29) de forage latérales dans le verre (12) de lunettes, un gabarit (1) est placé sur le verre (12, 13) de lunettes, lequel gabarit qui présente un guide de foret grâce auquel l'entaille de forage est forée de manière exacte et ménageant le verre, et **en ce qu'**à distance du guide de foret d'entaille, un trou de forage (36) est foré à travers le verre (12) de lunettes à distance de l'entaille de forage à l'aide du gabarit et de l'autre guide de foret disposé dans le gabarit, trou de forage qui accueille le raccord à vis nécessaire pour fixer l'arceau (31) au verre.

3. Procédé selon la revendication 1, **caractérisé en ce que** l'extrémité d'un arceau de branche ou de pont présente une tige filetée dont la forme correspond à l'entaille de la forure, **en ce que** la tige filetée est introduite dans la forure du trou de forage et **en ce qu'**un contre-écrou est placé sur l'extrémité libre de la tige filetée.

4. Procédé selon la revendication 3, **caractérisé en ce que** la tige filetée est conformée avec une surlongueur et de manière à convenir pour des épaisseurs maximales de verre et **en ce que** la partie de la tige qui déborde est raccourcie à la longueur voulue.

5. Système de lunettes fabriqué selon un procédé selon une des revendications 1 - 4, **caractérisé en ce que** des entailles (8, 8) de forage forées dans le verre en partant des deux bords du verre (16) de lunettes s'étendent vers l'intérieur, la forure s'étendant du bord du verre de lunettes vers l'intérieur est chaque fois forée de manière cylindrique dans le verre (16) approximativement jusqu'à la moitié du trou (36) de forage concerné et l'autre moitié approximativement semi-cylindrique du trou de forage est une forure en partie à vide, l'axe du trou de forage s'étend dans ou parallèlement au plan du verre de lunettes et un autre trou (5') de forage est conformé avec son axe approximativement à angle droit par rapport à l'axe du trou d'entaille (36) dans le verre (16) pour accueillir un raccord à vis (44).

6. Système de lunettes selon la revendication 5, **caractérisé en ce que** les extrémités (21, 22) des arceaux de pont et de branche (19, 20) adaptées dans leur forme périphérique à la forme de section de l'entaille (36) de forage, **en ce que** la section d'extrémité (37) présente un gradin (39) d'épaisseur d'arceau réduite correspondant à la profondeur de l'entaille (36) de forage et **en ce que** la forure (5') dans la section terminale (37) recouvre la forure (43) dans le verre.

7. Système de lunette selon la revendication 6, **caractérisé en ce que** le gradin intérieur (40) de l'entaille (36) de forage coïncide parfaitement avec le gradin (39) de l'arceau de branche (38).

8. Gabarit de forage pour la réalisation de forures dans des verres de lunettes, pour relier le verre de lunettes avec une extrémité d'un arceau d'une monture de lunettes, pour mettre en oeuvre le procédé selon les revendications 1 et 2 ou encore pour fabriquer le système de lunettes selon les revendications 3, 4 ou 5, **caractérisé en ce que** le gabarit (1) est constitué d'une partie de tête (2) avec un guide de foret (4) et d'un bras (3) flexible, en forme de plaque, s'étendant latéralement depuis la partie de tête, l'axe du guide de foret s'étendant de manière approximativement perpendiculaire au plan du bras s'étendant latéralement, **en ce que** la partie de tête présente un autre guide de foret (6) dont l'axe s'étend approximativement dans le plan du bras (3) s'étendant latéralement, le gabarit pouvant être placé sur un verre de lunettes à traiter de telle manière que le bras repose sur le verre de lunettes et la partie de tête vienne repose contre la limite latérale du verre de lunettes, et **en ce que** l'axe central du guide de foret (6) s'étend de manière approximativement tangentielle par rapport au côté inférieur (10) du bras (3) s'étendant latéralement.

9. Gabarit de forage selon la revendication 6, **caractérisé en ce que** le gabarit (1) composé d'une partie de tête (2) et d'un bras (3) latéral à longue tige forme une forme en L avec un courte section verticale (2) et une longue section horizontale (3).

10. Gabarit de forage selon la revendication 6 ou 7, **caractérisé en ce que** le côté inférieur (10) du bras (3) s'étendant latéralement est courbé d'une manière correspondant approximativement à la courbure d'un verre (16) de lunettes entre le raccordement de l'arceau de pont et le raccordement de l'arceau de branche (14) ainsi que d'une manière correspondant à la courbure du verre de lunettes approximativement à angle droit à cela.

11. Gabarit de forage selon une des revendications 6 - 8, **caractérisé en ce que** le bras (3) s'étendant latéralement a, vu du dessus, approximativement la forme d'une massue à laquelle fait suite en un seul tenant la partie de tête (2), a un rapport de largeur : épaisseur d'environ 5: 1 à 15: 1 et est conformé de manière flexible sur son étendue longitudinale pour s'adapter aux diverses courbures du verre (12, 13) de lunettes.

12. Gabarit de forage selon une des revendications 6 - 9, **caractérisé en ce que** le bras (3) s'étendant latéralement est courbé tant dans l'axe longitudinal que dans l'axe transversal.

13. Gabarit de forage selon une des revendications 6 - 10, **caractérisé en ce qu'**une butée (13) qui représente une limite pour un foret (14) réalisant la forure transversale (7) est conformée dans le sens de l'axe du guide de foret (6) dans la région de l'extrémité de la partie de tête (2).

14. Gabarit de forage selon la revendication 11, **caractérisé en ce que** la butée (13) est une goupille de limitation insérée, p. ex. vissée, dans le gabarit ou le guide de foret (4) proprement est conformé comme une butée.
